# EUROPEAN PATENT APPLICATION

(11) **EP 3 415 003 A1**
(43) Date of publication of application: **19.12.2018**
(21) Application number: 17763042.3
(22) Date of filing: 01.03.2017
(51) Int. Cl.: A01M 1/14, A01M 1/02, A01N 25/34, A01N 27/00, A01N 35/02, A01N 37/02, A01N 37/06, A01N 65/00, A01P 7/02

(54) **MITE-CAPTURING SHEET**

(30) Priority: 08.03.2016 JP 2016044004
(71) Applicant: Kuraray Trading Co., Ltd., Osaka-shi, Osaka 530-8611 (JP)
(72) Inventor: AKIBA Eiji, Osaka-shi Osaka 530-8611 (JP)
(74) Representative: Müller-Boré & Partner Patentanwälte PartG mbB
(86) International application number: PCT/JP2017/008146
(87) International publication number: WO 2017/154702

(57) **Abstract**

A mite-capturing sheet (1) includes an adhesive sheet (3) that captures mites and a resin sheet (4) placed on the adhesive sheet (3) and containing an attractant. The resin sheet (4) has a plurality of resin sheet openings (5) that expose the adhesive sheet (3).

## Description

### TECHNICAL FIELD

The present invention relates to mite-capturing sheets that attract mites and capture them by an adhesive surface.

### BACKGROUND ART

Many mites grow especially in bedding such as comforters, futon mattresses, and pillows, carpets, cushions, pet mats, etc. in living spaces, and mite-capturing sheets for attracting and capturing mites are conventionally proposed.

For example, a mite-capturing sheet is proposed which has an outer sheet layer of nonwoven fabric bonded to the surface of an attracting layer containing a mite attractant and an adhesive (see, e.g., Patent Document 1). Another mite-capturing sheet is proposed in which an adhesive layer and an attractant are accommodated in a bag formed by an outer sheet and a breathable sheet is placed between the adhesive layer and the outer sheet (see, e.g., Patent Document 2).

A mite catcher is proposed which has a mite attracting and killing body formed by impregnating the surface of a porous material with an attracting perfume and heat treating the surface of the resultant porous material to melt a perfume component contained in the attracting perfume and thus form an attracting perfume film on the surface of the porous material and in a multiplicity of micropores of the porous material (see, e.g., Patent Document 3).

A mite-trapping mat is proposed which includes a mite attracting substance, a film bag surrounding the mite attracting substance, and a cushioning body that makes space in the film bag. The inside of the film bag is dark, and the film bag has a multiplicity of small holes extending through the film. By using negative phototropism of mites, mites are attracted to the dark place (inside) through the small holes formed in the film and are killed by a desiccant (see, e.g., Patent Document 4).

### CITATION LIST

### PATENT DOCUMENTS

PATENT DOCUMENT 1: Japanese Unexamined Patent Publication No. 2002-253103
PATENT DOCUMENT 2: Japanese Unexamined Patent Publication No. 2008-161102
PATENT DOCUMENT 3: Japanese Unexamined Patent Publication No. 2013-252102
PATENT DOCUMENT 4: Japanese Unexamined Patent Publication No. 2015-029433

### SUMMARY OF THE INVENTION

### TECHNICAL PROBLEM

In the mite-capturing sheets described in Patent Documents 1 and 2, a large part of an adhesive surface is covered by the outer sheet layer, which limits the capability to capture mites by adhesion.

In the mite-capturing sheet described in Patent Document 3, a certain number of mites are captured, but dead mites and mites' feces are accumulated on the mite-capturing sheet, which may be a source of allergens.

The mite-trapping mat described in Patent Document 4 need be placed in a dark place that is not exposed to light. Accordingly, negative phototropism cannot be effectively used. Moreover, since mites tend to dislike low humidity, the mite-trapping mat does not have a sufficient mite-attracting effect, which limits the capability to capture mites.

The present invention was made in view of the above problems, and it is an object of the present invention to provide a mite-capturing sheet that can efficiently capture mites and can effectively restrain production of allergens from dead mites.

### SOLUTION TO THE PROBLEM

In order to achieve the above object, a mite-capturing sheet of the present invention is a mite-capturing sheet including an adhesive sheet that captures mites and a resin sheet placed on the adhesive sheet and containing an attractant, characterized in that the resin sheet has a plurality of openings that expose the adhesive sheet.

### ADVANTAGES OF THE INVENTION

According to the present invention, attracted mites can be efficiently captured by the adhesive sheet exposed through the openings. Production of allergens from dead mites can be efficiently restrained.

### BRIEF DESCRIPTION OF THE DRAWINGS

[FIG. 1] FIG. 1 is a plan view of a mite-capturing sheet according to an embodiment of FIG. 1 the present invention.
[FIG. 2] FIG. 2 is a sectional view of the mite-capturing sheet according to the embodiment of the present invention, taken along line A-A in FIG. 1.
[FIG. 3] FIG. 3 is a sectional view of a modification of the mite-capturing sheet according to the embodiment of the present invention.
[FIG. 4] FIG. 4 is a plan view of a modification of openings in the mite-capturing sheet according to the embodiment of the present invention.
[FIG. 5] FIG. 5 is a sectional view of a modification of the mite-capturing sheet according to the embodiment of the present invention.
[FIG. 6] FIG. 6 is a sectional view of a modification of the mite-capturing sheet according to the embodiment of the present invention.
[FIG. 7] FIG. 7 is a sectional view of a modification of the mite-capturing sheet according to the embodiment of the present invention.

### DESCRIPTION OF EMBODIMENTS

An embodiment of the present invention will be described in detail below with reference to the accompanying drawings. The present invention is not limited to the following embodiment.

### <Mite-Capturing Sheet>

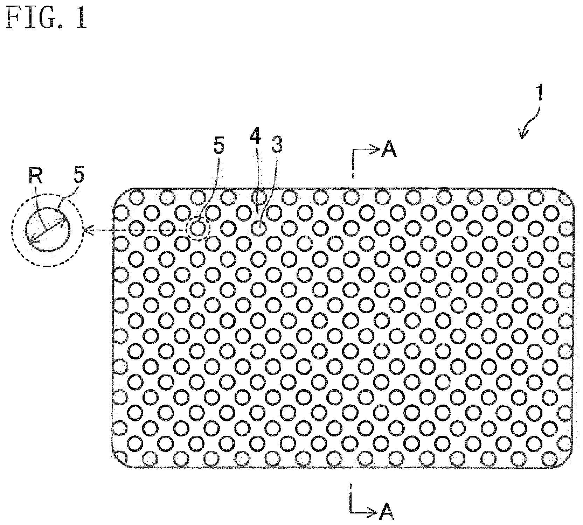

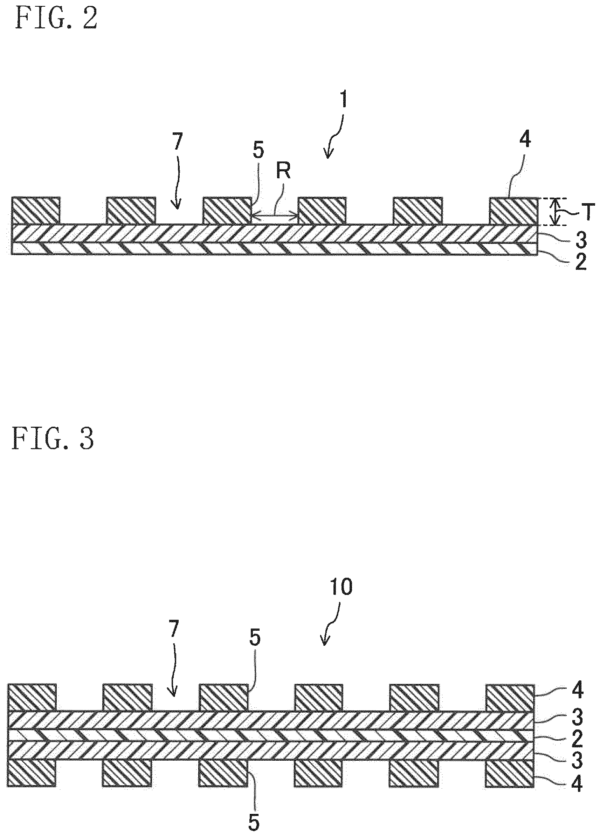

FIG. 1 is a plan view of a mite-capturing sheet according to an embodiment of the present invention, and FIG. 2 is a sectional view of the mite-capturing sheet according to the embodiment of the present invention, taken along line A-A in FIG. 1.

A mite-capturing sheet 1 of the present embodiment includes a base material 2, an adhesive sheet 3 placed on the base material 2, and a resin sheet 4 placed on the adhesive sheet 3.

The size of the mite-capturing sheet 1 can be determined as appropriate according to the intended use and is not particularly limited. For example, in the case where the mite-capturing sheet 1 is inserted between comforters in a closet, the length and width of the mite-capturing sheet 1 may be 1 cm to 100 cm, and for easy handling and disposal, preferably 5 cm to 50 cm, and more preferably 10 cm to 30 cm. In the case where the mite-capturing sheet 1 is placed under a futon mattress or a rug, the length and width of the mite-capturing sheet 1 are preferably in the range of 50 cm to 2 m as it is approximately the same size as a futon mattress or a rug and can be placed under the entire futon mattress or rug. The mite-capturing sheet 1 may have a larger size in the case where it is placed under a tatami mat or a carpet covering the entire floor. For example, the length and width of the mite-capturing sheet 1 may be in the range of 1 m to 50 m, and a plurality of mite-capturing sheets 1 with this size may be placed.

Since mites like dark places, the mite-capturing sheet 1 is preferably black or a dark color.

Although the types of mites to be captured are not particularly limited, the mite-capturing sheet 1 of the present embodiment can efficiently capture indoor mites such as Dermatophagoides farinae, Pyroglyphidae, Haplochthonius simplex Willman, and Cheyletidae.

### <Base Material>

The base material 2 is intended to uniformly hold the adhesive sheet 3 and add strength enough for the mite-capturing sheet 1 to be handled as a sheet. The base material 2 may be made of a material such as, e.g., cellulose paper, a film made of a thermoplastic resin such as polyester resin, polyamide resin, polyvinyl chloride resin, polyolefin resin, or acrylic resin, nonwoven fabric, woven fabric, knitted fabric, etc.

A flexible, thin material exhibiting good adhesion to an adhesive, being resistant to a solvent that is used for the adhesive, and having high dimensional stability is used as the base material 2.

### <Adhesive Sheet>

The adhesive sheet 3 is intended to capture mites by an adhesive surface and is not particularly limited as long as the adhesive sheet 3 has adhesive properties suitable for capturing mites. For example, the adhesive sheet 3 can be formed by an acrylic adhesive, a rubber adhesive, an SIS block copolymer adhesive, or a silicone adhesive. These adhesives may be used alone or two or more of these adhesives may be combined.

The adhesive sheet 3 having higher adhesive power is more desirable, and a permanent adhesive sheet that semi-permanently adheres to an object once bonded is preferable. A releasable adhesive sheet that is intended to be peeled off after a certain period of time is not preferable due to its relatively poor adhesive properties.

### <Resin Sheet>

The resin sheet 4 serves to attract mites and guide them to the adhesive surface. The resin sheet 4 contains an attractant that attracts mites. The attractant is not particularly limited as long as it has a typical mite-attracting effect. For example, the attractant can be selected from citral, geranyl propionate, neryl formate, geranyl formate, limonene, fruit extract, unsaturated fatty acid, γ-acaridial, pentadecane, heptadecadiene, pentadiene, 2-formyl-3-hydroxybenzyl formate, etc. In particular, citral consisting of geranial and neral that is a geometric isomer of geranial is known as an aggregation pheromone of mites and can effectively attract mites.

Although a resin that forms the resin sheet 4 is not particularly limited, a thermoplastic resin such as polypropylene resin, polyethylene resin, or ethylene-vinyl acetate copolymer resin is preferable as the resin sheet 4 made of such a resin slowly releases the attractant and the entire resin sheet 4 efficiently attracts mites.

As shown in FIGS. 1 and 2, the resin sheet 4 has a plurality of resin sheets openings (hereinafter simply referred to as the "openings") 5 so that the resin sheet 4 is in the form of mesh. A part of the adhesive sheet 3 is exposed through the openings 5, and a mite-capturing region 7 is formed by the openings 5 and the adhesive sheet 3 exposed through the openings 5.

It is preferable that the mite-capturing sheet 1 of the present embodiment satisfy the relation 0.2 ≤ S₂/S₁ ≤ 0.95, where S₁ represents the total area of the adhesive sheet 3 and S₂ represents the area of the adhesive sheet 3 exposed through the openings 5 as viewed in plan (i.e., in the state of the plan view shown in FIG. 1). When S₂/S₁ is less than 0.2, the area of the adhesive sheet 3 exposed through the openings 5 is small and mite capturing efficiency is therefore reduced. When S₂/S₁ is larger than 0.95, the area of the adhesive sheet 3 exposed through the openings 5 is too large, and therefore, for example, the user may accidentally touch the adhesive surface exposed through the openings 5 and his/her skin may stick to the adhesive surface, or when the mite-capturing sheet 1 is used under a cushion or a futon mattress, fibers may stick to the adhesive surface. Accordingly, the mite-capturing sheet 1 may be less easy to handle and may have a smaller effective adhesive surface. That is, by setting S₂/S₁ to 0.2 ≤ S₂/S₁ ≤ 0.95, the mite-capturing sheet 1 can efficiently capture mites without causing disadvantages such as being less easy to use and less easy to handle.

It is preferable that, in the mite-capturing sheet 1 of the present embodiment, as shown in FIGS. 1 and 2, the openings 5 have a substantially circular shape as viewed in plan, and the mite-capturing sheet 1 of the present embodiment satisfy the relation 0.3 ≤ T/R ≤ 1.0, where T represents the thickness of the resin sheet 4 and R represents the average opening diameter of the openings 5.

When T/R is less than 0.3, the thickness T of the resin sheet 4 is small relative to the average opening diameter R and therefore skin or fibers may stick to the adhesive surface. Accordingly, the mite-capturing sheet 1 may be less easy to handle and may have a smaller effective adhesive surface. When T/R is larger than 1.0, the thickness T of the resin sheet 4 is large relative to the average opening diameter R and the resin sheet 4 is therefore hard and less flexible. Accordingly, the mite-capturing sheet 1 of the present embodiment may be less easy to use when used, for example, under a cushion or a futon mattress. That is, by setting T/R to 0.3 ≤ T/R ≤ 1.0, the mite-capturing sheet 1 can efficiently capture mites without causing disadvantages such as being less easy to use and less easy to handle.

As used herein, the "average opening diameter" refers to the average of the diameters of the plurality of openings 5 having a substantially circular shape as viewed in plan.

The average opening diameter R of the openings 5 is preferably 0.5 mm or more and 20 mm or less, and more preferably 1.0 mm or more and 5 mm or less, in order to efficiently capture the indoor mites (body length: 50 to 200 µm) by each opening 5 and because the openings 5 need be large enough to capture other mites attracted by mites that have already been captured.

The thickness T of the resin sheet 4 is preferably 0.5 mm or more and 3.0 mm or less in order to achieve the aforementioned appropriate range of T/R and to provide appropriate flexibility when the mite-capturing sheet 1 is used.

As described above, the mite-capturing sheet 1 of the present embodiment can efficiently attract mites as the attractant blended in the resin sheet 4 is diffused from the entire mite-capturing sheet 1.

In the mite-capturing sheet 1 of the present embodiment, the resin sheet 4 has the plurality of openings 5 that expose the adhesive sheet 3. Mites attracted by the attractant contained in the resin sheet 4 can therefore be efficiently captured by the adhesive sheet 3 exposed through the openings 5.

In the present embodiment, since the resin sheet 4 is in the form of mesh, a large number of openings 5 can be formed in the resin sheet 4. The number of mites that can be captured by the adhesive sheet 3 can thus be increased.

Attracted mites move around on the mesh-like resin sheet 4 and are captured by the adhesive surface exposed through the openings 5, and the attractant is also diffused from the captured mites. Mites are known to eat mites, and therefore other mites are attracted to captured mites and fall onto the adhesive surface, whereby mites are captured one after another.

Although captured mites may lay eggs, the eggs and hatched mites are also captured by the adhesive surface. Moreover, mites remain captured on the adhesive surface even after they are dead. Feces excreted from mites until they die and allergens made of decomposition products from dead mites also remain captured on the adhesive surface. Production of allergens can thus be efficiently restrained.

Moreover, in the present embodiment, the resin sheet 4 is in the form of mesh. Accordingly, the mite-capturing sheet 1 with appropriate flexibility and certain hardness can be provided. The mite-capturing sheet 1 can thus be easily inserted and placed when used between comforters in a closet, under a mat, etc.

### (Method for Producing Mite-Capturing Sheet)

An example of a method for producing a mite-capturing sheet of the present embodiment will be described.

First, an attractant is blended into a resin that forms a resin sheet 4, thereby producing a mesh-like resin sheet 4 containing the attractant and having a plurality of openings 5. A method for blending an attractant into a resin is not particularly limited, and a known method can be used. Examples of the method includes a method in which porous inorganic fine particles carrying an attractant thereon is blended into a resin and a method in which a material having a high concentration attractant absorbed therein is added to a highly swellable resin.

Other example is a method in which a high concentration attractant is blended into a resin to produce a master batch and the master batch is blended into a resin that forms the resin sheet 4 by using the method described in Japanese Patent No. 3,963,941.

In the case where the attractant is thus blended into the resin sheet 4, the attractant itself does not serve as food for mites. This can restrain proliferation of captured mites and avoid an increase in allergens.

The content of the attractant in the entire resin sheet 4 is not particularly limited as long as it is equal to or higher than such a content that the concentration of the attractant around the resin sheet 4 is high enough to attract mites and this concentration can be maintained for three months or more due to sustained release of the attractant from the resin sheet 4. Excessive content of the attractant may cause a problem of odors during use and is also disadvantageous in terms of cost.

As described above, in order to restrain odor emission and an increase in cost and to efficiently attract mites, the content of the attractant in the entire resin sheet 4 is preferably 0.01 mass% or more and 5 mass% or less, and more preferably 0.1 mass% or more and 1 mass% or less.

Next, an adhesive sheet 3 is prepared. A base material 2 is bonded to one surface of the adhesive sheet 3, and the produced resin sheet 4 was bonded to the other surface thereof. The laminate of the base material 2, the adhesive sheet 3, and the resin sheet 4 is processed to a desired size. The mite-capturing sheet 1 shown in FIG. 1 can thus be produced.

The above embodiment may be modified as follows.

The above embodiment is described with respect to an example of the mite-capturing sheet 1 having the resin sheet 4 with the openings 5 bonded to one surface of the adhesive sheet 3. However, the present invention is also applicable to a mite-capturing sheet 10 having the adhesive sheet 3 on both surfaces of the base material 2 and having the resin sheet 4 with the openings 5 bonded to the surface (i.e., the opposite surface from the base material 2) of each adhesive sheet 3 as shown in FIG. 3. That is, the present invention is applicable to mite-capturing sheets having the resin sheet 4 on at least one surface of the adhesive sheet 3.

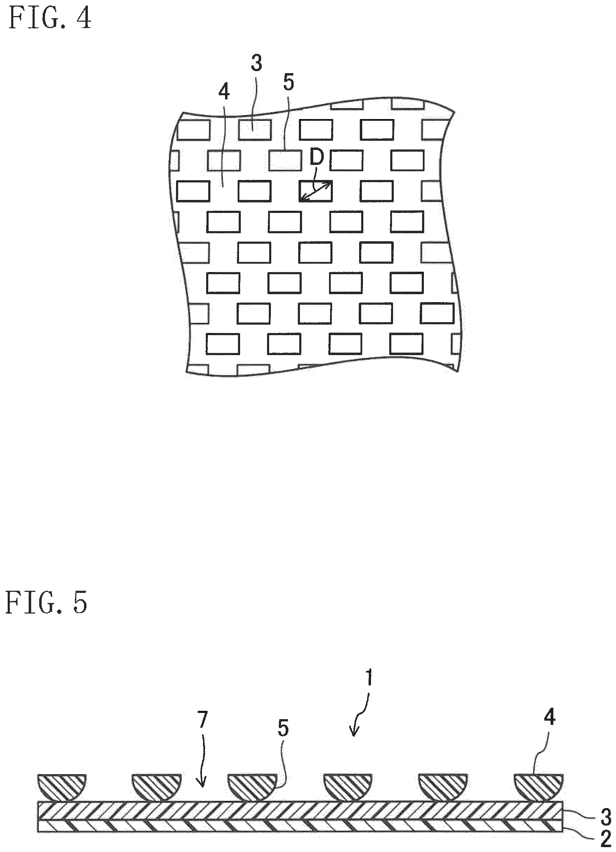

The above embodiment is described with respect to an example of the openings 5 having a substantially circular shape as viewed in plan. However, the shape of the openings 5 as viewed in plan is not particularly limited and may be a substantially polygonal shape (e.g., a substantially rectangular shape as shown in FIG. 4 or a substantially triangular shape), a substantially elliptical shape, etc.

The average opening diameter of the substantially rectangular openings 5 shown in FIG. 4 refers to the average of the largest and smallest lengths of the diagonals D of the openings 5 as viewed in plan. In the case where the openings have a substantially triangular shape, the average opening diameter may be the average of the base and the height as viewed in plan. In the case where the openings have a substantially elliptical shape, the average opening diameter may be the average of the major and minor axes as viewed in plan.

The above embodiment is described with respect to an example of the openings 5 having a substantially rectangular section as shown in FIG. 2. However, the sectional shape of the openings 5 is not particularly limited. For example, as shown in FIG. 5, the openings 5 may have a substantially arc-shaped section that curves inward toward the adhesive sheet 3.

With this configuration, the area of the adhesive sheet 3 exposed through the openings 5 is increased, whereby attracted mites can be more efficiently captured.

In the case where the openings 5 have a substantially arc-shaped section or a trapezoidal section with its lower base shorter than its upper base, the resin sheet 4 overhangs the adhesive surface. Accordingly, as mites walking on the surfaces of the openings 5 get closer to the adhesive surface, the backs or sides of the mites are more likely to contact the adhesive surface. Mites can therefore be easily captured by the adhesive surface.

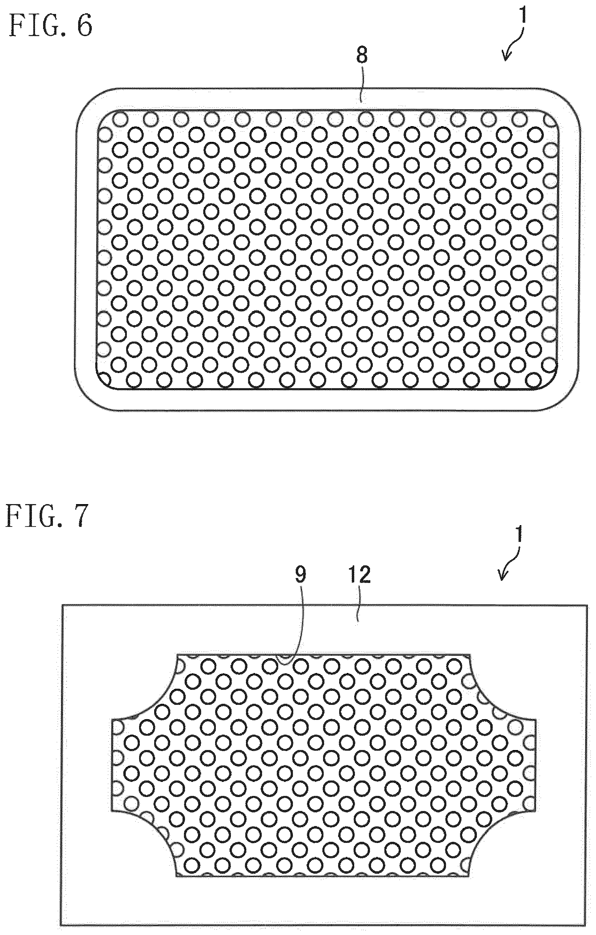

In order to protect the peripheral edge of the mite-capturing sheet 1, a cover member 8 may be provided along the peripheral edge of the mite-capturing sheet 1 as shown in FIG. 6, or the mite-capturing sheet 1 may be accommodated in a case 12 having a case opening 9 as shown in FIG. 7.

In order to prevent fine fibers from sticking to the adhesive surface of the mite-capturing sheet 1, the surface of the mite-capturing sheet 1 may be covered with a relatively thin cloth with a mesh opening of 50 µm or more through which mites can easily pass through.

### Examples

The present invention will be described below based on examples. The present invention is not limited to these examples. These examples may be altered or modified within the spirit and scope of the present invention, and the alterations and modifications are not excluded from the scope of the present invention.

### (Example 1)

### (Production of Mite-Capturing Sheet)

First, based on the method described in Japanese Patent No. 3,963,941, polypropylene (J-108M made by Japan Polypropylene Corporation), SEPTON (SEPS2014 made by KURARAY CO., LTD.), and citral (made by OHTSUKI & CO., LTD.) were blended together at a mass ratio of 60/20/20 in a biaxial kneader and formed into strands, and the strands were cut into pellets. Polypropylene-based master batch pellets containing 20 weight% of citral were thus produced.

Next, 2 mass% of the produced master batch was added to a polypropylene resin that is supplied when producing molded polypropylene mesh (trade name: P-DM2, black, made by DAINIPPON PLASTICS CO., LTD.), thereby producing a polypropylene resin sheet having 0.4 mass% of citral blended therein. The thickness of the resin sheet was 1.0 mm, the average opening diameter of openings was 2.8 mm, and the thickness divided by the average aperture diameter was 0.36.

The resin sheet thus produced was then bonded to both surfaces of an acrylic double-sided adhesive sheet (trade name: TC5510, made by TOYO COATING CO., LTD.). Thereafter, the resultant double-sided adhesive sheet was cut into 12 cm by 18 cm rectangles. Mite-capturing sheets were thus produced.

The proportion of the area of the adhesive sheet exposed through the openings to the total area of the adhesive sheet as viewed in plan was 57%.

### (Capturing Evaluation)

Two commercially available cotton cloths were placed on a culture medium of Dermatophagoides farinae and the produced mite-capturing sheet was placed thereon. The number of captured mites was checked after 64 hours with an electron microscope. A huge number of mites (278,390 mites) had been captured.

### (Example 2)

### (Production of Mite-Capturing Sheet)

First, 2 mass% of the master batch produced in Example 1 was added to a polypropylene resin that is supplied when producing molded polypropylene mesh (trade name: DXS321, made by DAINIPPON PLASTICS CO., LTD.), thereby producing a polypropylene resin sheet having 0.4 mass% of citral blended therein. The thickness of the resin sheet was 0.8 mm, the average opening diameter of openings was 4.1 mm, and the thickness divided by the average aperture diameter was 0.20.

Next, as in Example 1, the resin sheet thus produced was bonded to both surfaces of an acrylic double-sided adhesive sheet (trade name: TC5510, made by TOYO COATING CO., LTD.). Thereafter, the resultant double-sided adhesive sheet was cut into 12 cm by 18 cm rectangles. Mite-capturing sheets were thus produced.

The proportion of the area of the adhesive sheet exposed through the openings to the total area of the adhesive sheet as viewed in plan was 78%.

### (Capturing Evaluation)

Next, as in Example 1, the number of captured mites was checked after 64 hours. A large number of mites (56,060 mites) had been captured, but the number of captured mites was smaller than in Example 1.

This is because, in Example 2, the proportion of the area of the adhesive sheet exposed through the openings was as high as 78%, but the thickness divided by the average opening diameter was smaller than 0.3, and therefore skin or fibers stuck to a part of the adhesive surface exposed to a larger extent, which resulted in a reduced area of an effective adhesive surface.

However, a large number of mites were still captured in Example 2. It can therefore be said that the mite-capturing sheet of Example 2 can efficiently capture mites.

### (Example 3)

### (Production of Mite-Capturing Sheet)

First, 2 mass% of the master batch produced in Example 1 was added to a polypropylene resin that is supplied when producing molded polypropylene mesh (made by DAINIPPON PLASTICS CO., LTD.), thereby producing a polypropylene resin sheet having 0.4 mass% of citral blended therein. The thickness of the resin sheet was 1.1 mm, the average opening diameter of openings was 1.0 mm, and the thickness divided by the average aperture diameter was 1.1.

Next, as in Example 1, the resin sheet thus produced was bonded to both surfaces of an acrylic double-sided adhesive sheet (trade name: TC5510, made by TOYO COATING CO., LTD.). Thereafter, the resultant double-sided adhesive sheet was cut into 12 cm by 18 cm rectangles. Mite-capturing sheets were thus produced.

The proportion of the area of the adhesive sheet exposed through the openings to the total area of the adhesive sheet as viewed in plan was 15%.

### (Capturing Evaluation)

Next, as in Example 1, the number of captured mites was checked after 64 hours. Mites had been captured (5,117 mites), but the number of captured mites was smaller than in Example 1.

This is because, in Example 3, the thickness divided by the average opening diameter was larger than 1.0 and the proportion of the area of the adhesive sheet exposed through the openings was as low as 15%.

However, it was confirmed that the mite-capturing sheet of Example 3 also had a mite capturing effect.

### (Example 4)

### (Production of Mite-Capturing Sheet)

First, 2 mass% of the master batch produced in Example 1 was added to a polypropylene resin that is supplied when producing molded polypropylene mesh (made by DAINIPPON PLASTICS CO., LTD.), thereby producing a polypropylene resin sheet having 0.4 mass% of citral blended therein. The thickness of the resin sheet was 3.6 mm, the average opening diameter of openings was 2.9 mm, and the thickness divided by the average aperture diameter was 1.24.

Next, as in Example 1, the resin sheet thus produced was bonded to both surfaces of an acrylic double-sided adhesive sheet (trade name: TC5510, made by TOYO COATING CO., LTD.). Thereafter, the resultant double-sided adhesive sheet was cut into 12 cm by 18 cm rectangles. Mite-capturing sheets with a thickness of 7.5 mm were thus produced.

The proportion of the area of the adhesive sheet exposed through the openings to the total area of the adhesive sheet as viewed in plan was 45%.

### (Capturing Evaluation)

Next, as in Example 1, the number of captured mites was checked after 64 hours. A large number of mites had been captured (168,530 mites). The mite-capturing sheet of Example 3 was able to efficiently capture mites.

Since the thickness was 7.5 mm and the thickness divided by the average opening diameter was larger than 1.0, the mite-capturing sheet was less flexible and was slightly less easy to use when the mite-capturing sheet was used under a futon mattress.

### INDUSTRIAL APPLICABILITY

As described above, the present invention is particularly useful for mite-attracting sheets that attract mites and capture them by an adhesive surface.

### DESCRIPTION OF REFERENCE CHARACTERS

- 1: Mite-Capturing Sheet
- 2: Base Material
- 3: Adhesive Sheet
- 4: Resin Sheet
- 5: Resin Sheet Opening (Opening)
- 7: Mite-Capturing Region
- 8: Cover Member
- 9: Case Opening
- 10: Mite-Capturing Sheet
- 12: Case
- R: Average Opening Diameter of Openings
- S₁: Total Area of Adhesive Sheet as Viewed in Plan
- S₂: Area of Adhesive Sheet Exposed through Openings as Viewed in Plan
- T: Thickness of Resin Sheet

## Claims

1. A mite-capturing sheet including an adhesive sheet that captures mites and a resin sheet placed on the adhesive sheet and containing an attractant, **characterized in that**
the resin sheet has a plurality of openings that expose the adhesive sheet.

2. The mite-capturing sheet according to claim 1, **characterized by** satisfying the relation 0.2 ≤ S₂/S₁ ≤ 0.95, where S₁ represents a total area of the adhesive sheet and S₂ represents an area of the adhesive sheet exposed through the openings as viewed in plan.

3. The mite-capturing sheet according to claim 1 or 2, **characterized in that**
the openings have a substantially circular shape as viewed in plan, and
the mite-capturing sheet satisfies the relation 0.3 ≤ T/R ≤ 1.0, where T represents a thickness of the resin sheet and R represents an average opening diameter of the openings.

4. The mite-capturing sheet according to any one of claims 1 to 3, **characterized in that**
the resin sheet has the attractant blended therein.

5. The mite-capturing sheet according to any one of claims 1 to 4, **characterized in that**
the resin sheet is in the form of mesh.

6. The mite-capturing sheet according to any one of claims 1 to 5, **characterized in that**
the attractant is at least one selected from the group consisting of citral, geranyl propionate, neryl formate, geranyl formate, limonene, fruit extract, unsaturated fatty acid, γ-acaridial, pentadecane, heptadecadiene, pentadiene, and 2-formyl-3-hydroxybenzyl formate.
